# EUROPEAN PATENT APPLICATION

(11) **EP 2 667 587 A1**
(43) Date of publication of application: **27.11.2013**
(21) Application number: 12305560.0
(22) Date of filing: 22.05.2012
(51) Int. Cl.: H04N 5/235, H04N 7/14

(54) **Lightning solution for video call session in low luminosity environment**

(71) Applicant: ST-Ericsson SA, 1228 Plan-les-Ouates (CH)
(72) Inventor: Santini, Nicolas, 75018 PARIS (FR)
(74) Representative: Hirsch & Associés

(57) **Abstract**

Communication device (T1) comprising a screen (S) and a camera (C) adapted to capture a first moving picture related to the user of said communication device, said screen being adapted to display a moving picture (P1) related to the user of a remote communication device and an illuminating surface (Z).

The communication device further comprises software module for determining this illuminating surface.

## Description

### FIELD OF THE INVENTION

The invention relates to the field of communication device equipped with a built-in camera which takes a moving picture and to its application to video call calls and videoconferencing. In particular, it relates to smartphones, tablets or laptop computers and any mobile communication devices equipped with such a camera and a screen.

### BACKGROUND OF THE INVENTION

Recently mobile communication devices like smartphones or tablets are equipped with camera able to take moving picture. This camera is often used to capture user's own moving picture in the context of a video call session or of a videoconferencing application.

A video call session is similar in any call session but moving pictures (video) are streamed in addition to voice channels. It allows each party to visualize the others thanks to moving picture displayed on their own communication devices.

Video call sessions usually connect two parties, but it may be possible to establish the session between more than two parties, for instance by using a conference bridge.

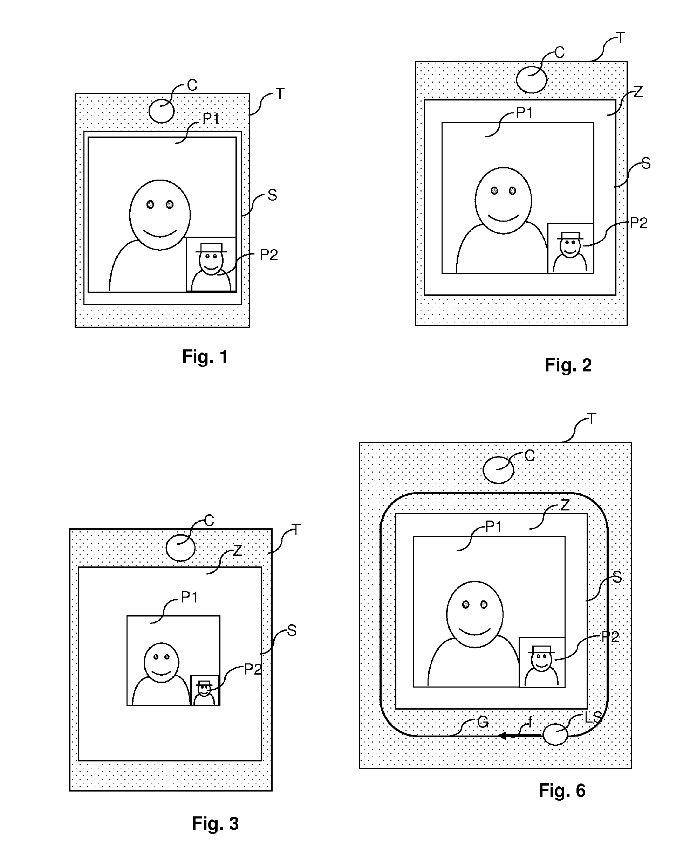

The figure 1 illustrates the screen S of a communication device T wherein a video call session is established.

Typically, it shows a moving picture P1 of the other party, and a smaller moving picture P2 of the user. This smaller picture P2 allows the user to check how the other party (or parties) can see him or her. Generally, the moving picture P1 is set as large as the screen so as to get a good user experience. The communication device further comprises a camera C.

Such a communication device allows the user to place or receive video call sessions from everywhere without having access to a videoconferencing room or any expensive material.

However, due to this mobility, there may be occasions where the session would need to be established in suboptimal or critical light environment. The user can take care of the environment when he or she initiates the call, but she or he can be in a callee situation and thus with little control of his/her environment.

These critical or suboptimal environments can be indoor or night environments, where the ambient light is not sufficient for the embedded camera to capture moving picture with a sufficient luminosity quality. The consequence is that the other party will perceive the captured moving picture as too dark and/or with insufficient contrast and/or with too much image noise.

Some works have been undertaken to improve the quality of photographies taken in dark environment.

A first solution consists in embedding a strobe light within the communication device. This strobe light may utilize a xenon lamp. However, this solution is not appropriate in the videoconferencing context because such an application requires a lighting unit that emits light continuously instead of a strobe light that produces rapid burst of light.

Another solution improved the situation by adding a continuous lighting diode to a mobile telephone device. Such a solution is disclosed by the patent application US2005/0253923.

However, such a solution has the drawback to require an additional apparatus to the communication device, thus increasing its manufacturing cost and its complexity. Also, the lighting diode emits a hard light within a limited solid angle. As a result, the user may be well illuminated in some part of his/her face but not in others. The final moving picture may then be poor and difficult to correct because of too high contrast.

There is therefore a need for a solution permitting to establish a video communication session between (at least) two parties while improving the quality of the captured and transmitted moving pictures and without adding further costly apparatuses to the communication devices.

### SUMMARY OF THE INVENTION

An object of embodiments of the present invention is to alleviate at least partly the above mentioned drawbacks.

This is achieved with a method for establishing a video call session between a first communication device and a second communication device connected by a communication network. This method comprises:
- Capturing by a camera embedded in the first communication device a first moving picture related to the user of this first communication device,
- Displaying on a screen of the first communication device a second moving picture related to the user of the second communication device,
- Determining an illuminating surface,
- Displaying on the screen this illuminating surface.

According to embodiments of the invention, the method may further comprise a step of displaying on the screen the first moving picture.

The illuminating surface may be substantially white.

The step of determining the illuminating surface may comprise determining its size.

This size can for instance be determined by manual commands usable by the user of the first communication device. The size can also be determined by manual commands usable by the user of the second communication device (T2) and transmitted through the communication network.

The size may be determined also by selecting a profile corresponding to a predetermined size among a list of available profiles. This list can be presented to the user and the user then selects a profile among the presented list.

The size may be determined by measuring the lighting conditions of the user of the first communication device. These lightning conditions may be measured by analyzing the first moving picture.

The step of determining the illuminating surface may also comprise determining its shape.

The invention has also as an object a computer program product comprising a computer readable medium, having thereon a computer program comprising program instructions, the computer program being loadable into a data-processing unit and adapted to cause execution of the method previously defined when the computer program is run by the data-processing unit.

Another object of the invention is a communication device comprising a screen and a camera adapted to capture a first moving picture related to the user of the communication device. The screen is adapted to display a moving picture related to the user of a remote communication device and an illuminating surface. This communication device further comprises a software module for determining this illuminating surface.

According to embodiments of the invention, the software module may comprise means for acquiring inputs from the user.

The communication device may further comprise a light guide for extracting the light emitted by at least one light source.

Further features and advantages of embodiments of the invention will appear from the following description of some embodiments of the invention, given as nonlimiting examples, with reference to the accompanying drawings listed hereunder.

### BRIEF DESCRIPTION OF THE DRAWINGS

Fig. 1 shows a communication device according to the state of the art.
Fig. 2 shows a communication device according to an embodiment of the invention.
Fig. 3 shows a communication device according to another embodiment of the invention.
Fig. 4a and 4b show a communication device according to an embodiment of the invention comprising manual commands.
Fig. 5a, 5b and 5c show examples of shapes for the illuminating surface according to embodiments of the invention.
Fig. 6 shows a communication device according to an embodiment of the invention.

### DETAILED DESCRIPTION OF EMBODIMENTS OF THE INVENTION

The figure 2 illustrates a communication device T according to an embodiment of the invention.

This communication device can be any communication terminal enabled to initiate, as a caller and/or as a callee, a video call session with another party. It can be a mobile phone, a smartphone, a tablet, a laptop computer, etc. However, the invention is particularly useful for devices having larger screens like laptop computers or tablets.

It comprises a screen S and a camera C able to capture a moving picture related to the user. The camera C is preferentially directed towards the user of the communication device, i.e. on the same side of it as the screen S.

In a normal usage way, the camera captures moving picture captures of the face or a portrait of the user. However, any other view related to the user can be captured instead. For instance, at some point of the call session, the user may want to change the view but pointing the camera differently. For example, he or she may direct it to another subject like a blackboard he or she is writing on, and any objet he or she is willing to show to the other party.

The screen S is adapted to display a moving picture P1 related to the user of a remote communication device. This remote communication device can be according to an embodiment of the invention or not. It is just necessary that it comprises a camera also able to capture a moving picture related to its own user.

This moving picture P1 can be displayed in a large portion of the screen S.

In addition, the moving picture P2 that is captured by the camera C can also be displayed in the screen S, so as to allow the user to check how he or she is seen by the other party. This moving picture P2 can be optionally displayed and, for instance, switchable by a command available to the user.

This moving picture P2 can be displayed as a substantially smaller portion of the screen S than the moving picture P1.

Also, the screen S can display an illuminating surface Z.

This illuminating surface Z aims at emitting a light toward the user (or any other subject in front of the screen S).

The illuminating surface can therefore be constituted by pixels of high luminosity. In the RGB (Red, Green, Blue) space, it means pixels with high levels for each components, or at least for 2 of them. In the hue, Saturation, Lightness color model, it may mean that only the Lightness is set to a high value.

In an embodiment of the invention, the pixels are white or a color close to the white.

In another embodiment of the invention, the color of the pixels can be determined according to an evaluation of the main color of the moving picture P1.

In still another embodiment of the invention, the illuminating surface may be textured. For example, it could be a zebra texture (black and white, or other combination of colors.)

The illuminated surface can be characterized by some parameters. These parameters can inserted in a dataset stored in a memory of the communication device T, in a card which may be plugged inside the communication device T (like a SIM card), or in a server located in a telecommunication network to which the communication device is connected. For instance, this dataset may be part of the user profile dataset which is store in a profile server (or server farm).

Other characterizing parameters of the illuminating surface can comprise its shape and its size.

The size of the illuminating surface Z has a direct influence on its illuminating effect: the larger it is, the more the subject is illuminated by the screen.

When the subject, i.e. the user in most situations, is within a dark environment, the illuminating surface Z can be larger like represented in figure 3.

Then the moving pictures P1 and P2 are reduced in size and surrounded by a large white frame Z.

The parameters of the illuminating surface, like its size, can be determined in various ways.

Generally, the communication device comprises a software module adapted to determine the illumining surface. For doing so, the software module can comprise means for acquiring inputs of the user, e.g. through a man-machine interface. As it will appear more clearly later the software module can also comprises means to perform operations and automatic computations.

This software module can be an application which can be downloaded from an application market, or a built-in module which is part of the operating system (OS) or of the basic middleware layer embedded in the communication device.

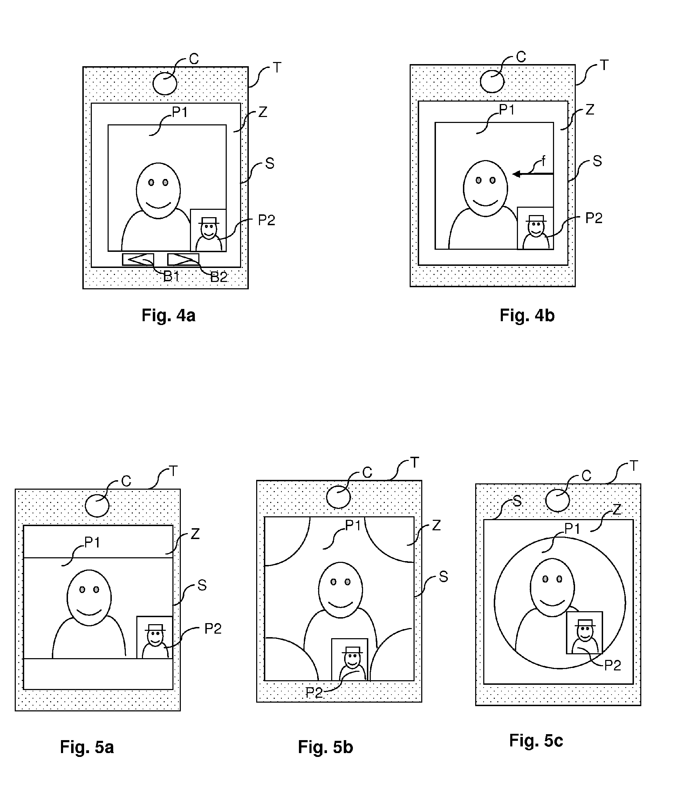

The figures 4a and 4b shows two embodiments for allowing the user to determine manually the size of the illuminating surface Z by using manual commands.

According to the embodiment depicted in figure 4a, two elements B1, B2 of the man-machine interface of the communication device T provide these manual commands which are usable by the user to modify the illuminating surface Z.

These elements can be buttons of the communication devices, either dedicated buttons or multi-purpose buttons which acquire a dedicated button when the communication device T is running a video call session. Also, these two elements B1, B2 can be determined areas of the screen S that are actuated by pressing on them, in the situation where the screen S is a tactile screen.

The element B1 may be used to decrease the size of the illuminating surface Z, whereas the element B2 may be used to increase its size.

According to another embodiment, depicted in figure 4b, the screen is a tactile screen and the user can move the border of the illumining surface Z by sliding it, for instance by a movement of the finger according to the arrow f.

These two embodiments can be combined together. The elements B1, B2 can be present while the sliding effect would propose an alternative way for the user to achieve the same effect.

Other embodiments are possible in order to allow the user to manually determine the illuminating surface Z.

It is also possible to determine the illuminating surface by a semi-automatic way.

For instance, some typical profiles can be proposed to the user. These profiles may comprise: "indoor", "night", etc. They can also correspond to a certain number of levels (e.g. "level 1", "level 2"...) each corresponding to a different need for illuminating the user.

Each profile may correspond to a predetermined size of the illuminating surface Z. Some other parameters may be associated to the profiles, like its shape, or its main color as evocated above.

A list of available profiles can be presented to the user when the call is about to be established, or at any time during the call session. This list can be displayed when the user actuates a command (button, zone of the tactile screen S, etc.).

Also, it is possible for the profile to be selected according to the perceived environment. For instance some applications running on the communication device T can get knowledge about the exact location and the time. It is thus possible to determine whether the user is indoor or outdoor and what time it is. These elements can be refined with a meteorological view of the environment (acquired, for instance, from a meteorological server) so as to estimate the lightning conditions in which the user is. From such an estimation, it may be possible to automatically determine the most appropriate profile.

This profile-based embodiment can be combined with the manual embodiments explained above, for instance by allowing the user to depart from the illuminating surface Z set by a selected profile by fine-tuning its size with manual commands.

Still another possibility consists in determining the parameters of the illuminating surface in a fully automatic way, especially its size.

Such an embodiment can be based on measurements of the lightning conditions of the user.

These measurements can be performed by analyzing the moving image captured by the camera. After a calibration step, the overall lighting of the moving image can be representative of the lightning condition where is the user.

Therefore, the size of illuminating surface Z can be determined as a function of an overall lighting measured on the moving picture.

This overall lighting can be a mean lighting measured on the whole image. It may also be possible to extract from the moving image the shape of the face and perform the measurements on this shape only, as it is the most relevant part of the image. It is also possible to use other criteria instead of the mean value.

Also, according to an embodiment of the invention, it can be possible to make use of a luminosity sensor, which can be embedded in the communication device. This luminosity sensor can provide a measurement of the luminosity in the environment that can help determining the "amount" of light that should be generated by the illuminating surface. So, for instance, its size may be proportional to this measurement; or a profile can be determined according to comparison of the measurement and predetermined thresholds.

Also, the information provided by the measurement by the luminosity sensor can be combined with the overall lightning information provided by the analysis of the captured moving picture, so as to generate more accurate information. Based on this combined information, the parameters of the illuminating surface can be determined in a more reliable way (or a better-matching profile can be proposed).

Of course, other embodiments are possible to make use of such a luminosity sensor.

Another possibility is to enable the other party to determine, fully or in part, the illuminating surface Z.

According to the moving image he or she gets of the user, this other party may feel the need to increase or decrease the lighting of the user.

This other party may be proposed commands, similar to the ones presented above, to manually determine the illuminating surface Z. The difference with the previous embodiments is that these commands will need to be transmitted through the communication network and then received and interpreted by the communication device T of the user.

The user may prevent the other party to shrink too much the display of the moving pictures P1, P2 by, for instance, setting up limits to the illuminating surface Z beyond which the other party cannot go.

In this embodiment, the assumption is made that the other party is in good position to determine whether he needs more lighting or not, according to the perceived quality of the displayed moving picture. It enables to take into account the subjectivity of the other party.

As said earlier, in addition to the determination of the size of the illuminating surface Z, it is also possible to determine other parameters associated with the illuminating surface.

An example of such a parameter is the shape.

In figures 4a, 4b, we have seen that the illuminating surface Z is forming a frame surrounding the moving pictures P1, P2. The figures 5a, 5b, 5c shows three different shapes of the illuminating surface Z, but many others can be envisioned within the scope of the invention.

Figure 5a shows an illuminating surface constituted by two horizontal banners, one on top, and one on bottom of the moving pictures P1, P2.

Figure 5b shows an illuminating surface Z constituted by 4 rounded angle areas in the four corners of the screen S.

Figures 5c shows an illuminating surface Z made by the extrusion of a circle inside which are displayed the moving pictures P1, P2.

These few examples among dozens of possibility make it clearer that the illuminating surface Z can be a continuous or a discontinued surface: figures 5b and 5c shows that it can be made of several non-connected areas.

A preferred, but not mandatory, characteristic of the illuminating surface Z is to be close the borders of the screen S. The reason for this is that it increases the footprint of the illuminating surface on the screen so that it generates a more ambient lighting. Also, the eye of the user is normally focused in the center of the screen S where are displayed the moving pictures P1, P2 and will then be not perturbed by the illuminating surface S surrounding them.

The figure 6 illustrates another embodiment of the invention.

The communication device T depicted in this figure 6 comprises a light guide G which surrounds the screen S. This light guide G can extract the light emitted by one or several light sources LS that are arranged to emit light into the light guide. The emitting direction can be in the plan formed by the top surface of the communication device T, so that no direct light coming from the source is emitted towards the user. The direction can be along the arrow f.

The light source can be LED or laser diodes.

There could also be several light guides, each associated with on (or several) light source(s).

As it has been evocated throughout the description of various embodiments the invention allows improving the light condition of the user by displaying an illuminating surface on the screen of the terminal. This generates a soft and ambient lighting, and avoids generating highly-contrasted moving image like more directed and focuses lighting means.

The solution can be implemented by way of only software modules run on the communication devices. It does not imply cost of hardware-based solution, despite it can be optionally coupled with the additional lights described in the embodiment of figure 6.

The solution is also fully configurable and allows the user and/or the other party to determine various configurations for the illuminating surface Z.

The solution can be deployed easily in larger screen devices, like tablets and the likes, where a large portion of the screen can be devoted to the illuminating surface Z without jeopardizing the user experience.

The invention has been described with reference to preferred embodiments. However, many variations are possible within the scope of the invention

## Claims

1. A method for establishing a video call session between a first communication device (T1) and a second communication device (T2), connected by a communication network, said method comprising:
- Capturing by a camera (C) embedded in said first communication device (T1), a first moving picture related to the user of said first communication device (T1),
- Displaying on a screen (S) of said first communication device (T1), a second moving picture related to the user of said second communication device (T2),
- Determining an illuminating surface (Z).
- Displaying on said screen said illuminating surface.

2. A method according to claim 1, further comprising displaying on said screen said first moving picture (P1).

3. A method according to claim 1 or 2, wherein said illuminating surface is substantially white.

4. A method according to claim 1 to 3, wherein determining said illuminating surface comprises determining its size.

5. A method according to claim 4, wherein said size is determined by manual commands usable by the user of said first communication device (T1).

6. A method according to claim 4, wherein said size is determined by manual commands usable by the user of said second communication device (T2) and transmitted through said communication network.

7. A method according to claim 4, wherein said size is determined by selecting a profile corresponding to a predetermined size, among a list of available profiles.

8. A method according to previous claim, wherein said list is presented to the user and wherein said user selects a profile among the presented list.

9. The method of claim 4, wherein said size is determined by measuring the lighting conditions of the user of said first communication device (T1).

10. The method according to previous claim, wherein said lightning conditions are measured by analyzing said first moving picture.

11. A method according to claim 1 to 10, wherein determining said illuminating surface comprises determining its shape.

12. A computer program product comprising a computer readable medium, having thereon a computer program comprising program instructions, the computer program being loadable into a data-processing unit and adapted to cause execution of the method according to any of claims 1 to 11 when the computer program is run by the data-processing unit.

13. Communication device (T1) comprising a screen (S) and a camera (C) adapted to capture a first moving picture related to the user of said communication device, said screen being adapted to display a moving picture related to the user of a remote communication device and an illuminating surface (Z), and said communication device further comprising software module for determining said illuminating surface.

14. Communication device according to claim 13, wherein said software module comprises means for acquiring inputs from said user.

15. Communication device according to claim 13 or 14, further comprising a light guide for extracting the light emitted by at least one light source.
